Europäisches Patentamt

European Patent Office

Office européen des brevets

(19)

(11) Publication number: **0 118 116**
**B1**

## EUROPEAN PATENT SPECIFICATION

(12)

(45) Date of publication of patent specification: **15.10.86**

(21) Application number: **84102222.1**

(22) Date of filing: **02.03.84**

(51) Int. Cl.⁴: **B 61 D 17/00,** B 64 C 1/06,
**B 62 D 31/02**

(54) **Construction of vehicle body.**

(30) Priority: **07.03.83 JP 35901/83**

(43) Date of publication of application:
**12.09.84 Bulletin 84/37**

(45) Publication of the grant of the patent:
**15.10.86 Bulletin 86/42**

(84) Designated Contracting States:
**DE FR**

(56) References cited:
**DE-C- 647 370**
**FR-A-2 360 458**
**GB-A-2 050 275**

(73) Proprietor: **Kawasaki Jukogyo Kabushiki Kaisha**
**1-1 Higashikawasaki-cho 3-chome**
**Chuo-ku Kobe-shi Hyogo-ken (JP)**

(72) Inventor: **Ishizuka, Masashi**
**27-1-3202, Aza Kakinokidani Yamada-cho Obu**
**Kita-ku Kobe-shi Hyogo-ken (JP)**
Inventor: **Ogawara, Makoto**
**16-37, Nishiokamoto 2-chome Higashinada-ku**
**Kobe-shi Hyogo-ken (JP)**

(74) Representative: **Rau, Manfred, Dr. Dipl.-Ing.**
**et al**
**Rau & Schneck, Patentanwälte Königstrasse 2**
**D-8500 Nürnberg 1 (DE)**

# Description

This invention relates to a construction of a vehicle body of means of transportation which is subjected to external pressure tending to fluctuate.

It has hitherto been usual practice to construct a vehicle body in a manner to serve the purpose of use and suit the condition of operation. Thus, the body of railroad car has a cross-sectional shape which is substantially rectangular, and a body of aircraft this is used for transporting passengers is substantially circular in cross-sectional shape.

In the case of a vehicle body of substantially square cross-sectional shape, it is possible to secure ample space above the heads of the passengers and in the vicinity of their legs, so that the riding comfort of the passengers can be obtained. However, a vehicle body of a square shape is rather low in strength with respect to fluctuations in external pressure applied thereto. It is difficult to solve this problem without increasing the weight of the vehicle body. Meanwhile, when the vehicle body has a substantially circular cross-sectional shape, its strength with respect to fluctuations in external pressure applied thereto is high. However, this type of vehicle body suffers the disadvantage that the passengers' riding comfort is impaired by the lack of a space for the passengers to move their legs freely in sitting position and stand up without their heads knocking against some objects. Any attempt to solve this problem would entail an increase in the size of the body with an attendant rise in weight. Thus, in the case of vehicle bodies of both rectangular and circular cross-sectional shape, the solutions proposed to obviate the aforesaid disadvantages have been unsatisfactory.

This invention has been developed for the purpose of obviating the aforesaid problem of the prior art. Accordingly, the invention has as its object the provision of a construction of a vehicle body suitable for use as a vehicle body of high strength of means of transportation subjected to fluctuations in external pressure applied thereto, which is capable of achieving a high riding comfort for passengers by adopting a substantially square cross-sectional shape for securing ample space for the passengers without causing a reduction in the ability to withstand pressure.

From GB—A—2050275 a vehicle body of substantially square cross-sectional shape comprising a plurality of transverse frames, a plurality of longitudinal structural members located at right angles to said frames to connect them together and a shell plate attached and secured to outer surface of said frames and of said longitudinal structural members is known.

The aforesaid object is accomplished by the feature of the invention that a first multiplicity of substantially square frames each having reinforcing portions on two upper corners thereof provided by rounding inner surfaces of the two upper corners and a second multiplicity of substantially square frames having reinforcing portions on two lower corners thereof provided by rounding inner surfaces of the two lower corners are alternately arranged and connected together by longitudinal structural members, and a shell plate is attached to the substantially square frames and the longitudinal structural members at their outer surfaces, to provide a substantially square vehicle body.

The advantages offered by the invention are:

(a) Although the vehicle body according to the invention is substantially square in cross-sectional shape, it is possible for the construction provided by the invention to achieve substantially as high resistance to external pressure applied thereto as a vehicle body of a substantially circular cross-sectional shape;

(b) The construction provided by the invention enables a sufficently large space to be provided to the passenger compartment to enable riding comfort to be improved in a manner that has hitherto been impossible for a vehicle body of a substantially circular cross-sectional shape to realize; and

(c) Since the construction provided by the invention enables the cross-sectional area of the vehicle body to be minimized, a light weight can be obtained in a vehicle body.

Additional and other objects, features and advantages of the invention will become apparent from the description set forth hereinafter when considered in conjunction with the accompanying drawings.

Fig. 1 is a schematic sectional view of a body of a vehicle shown as one example of a vehicle body of a substantially square cross-sectional shape used in the prior art suitable for use with railroad trains travelling at high speed;

Fig. 2 is a schematic sectional view of a body of a vehicle shown as one example of a vehicle body of a substantially circular cross-sectional shape suitable for use with aircraft;

Fig. 3 is a perspective sectional view of a vehicle body comprising one embodiment of the invention; and

Fig. 4 is a schematic view of explanation of the arrangement of the frames in relation to facilities in the passenger compartment.

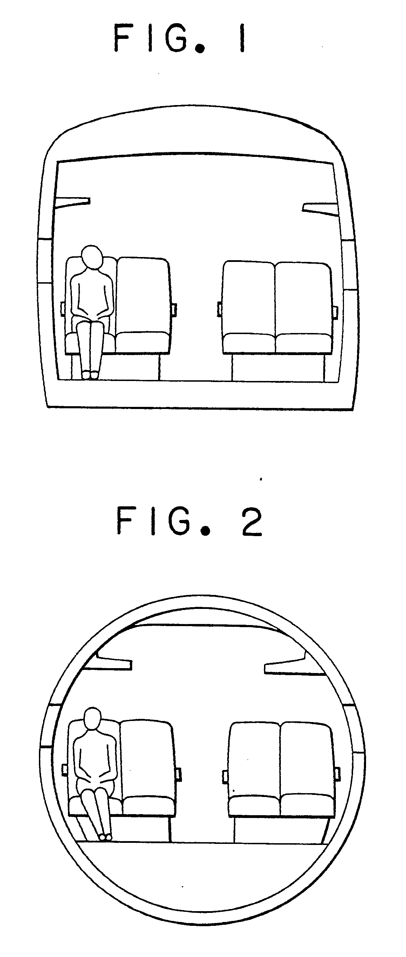

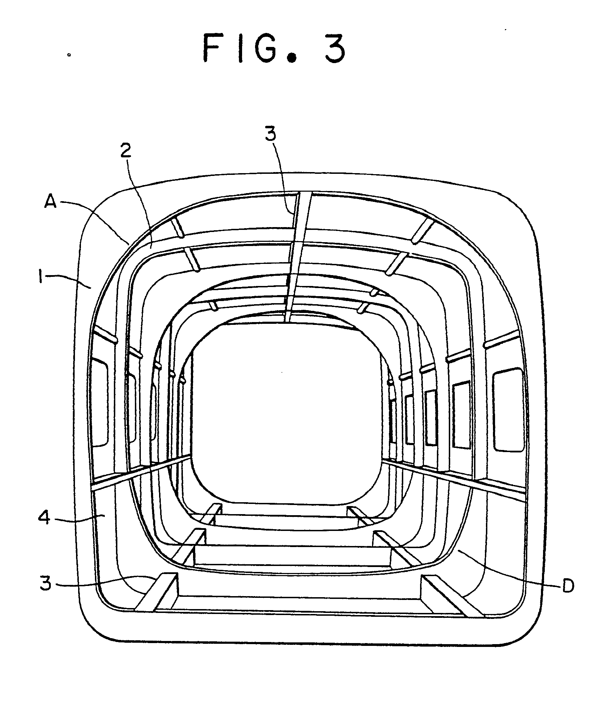

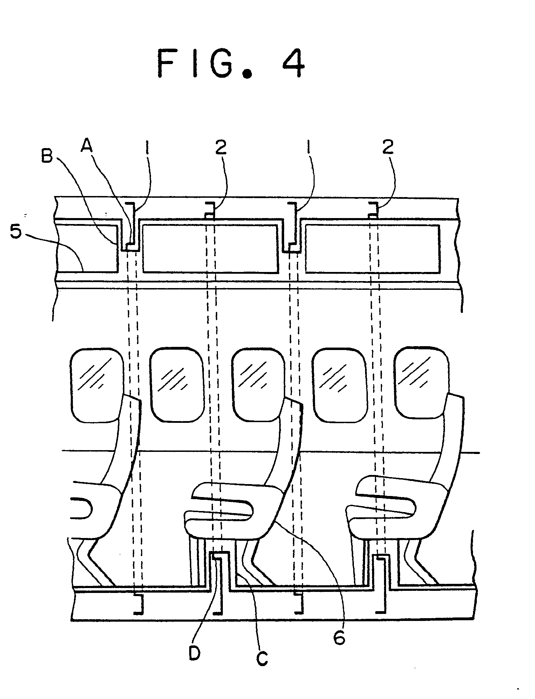

Figs. 3 and 4 show one embodiment of a construction of a vehicle body suitable for use with means of transportation travelling at high speed in conformity with this invention, which combines a large space desirable for achieving high riding comfort provided by the vehicle body of a substantially rectangular cross-sectional shape of railroad trains of the prior art shown in Fig. 1 with high resistance to pressure and light weight characteristic of the vehicle body of a substantially circular cross-sectional shape of aircraft shown in Fig. 2.

Referring to Fig. 3, there are shown frames 1 formed of material of light weight, such as an aluminum alloy having a substantially rectangular cross-sectional shape and including reinforcing portions A on two upper corners to increase the resistance of the frames 1 to changes

2

in external pressure applied thereto, and frames 2 formed on the same material as that for forming the frames 1 and having the same cross-sectional shape as the frames 1 which include reinforcing portions D on two lower corners provided by rounding inner surface of the two lower corners to increase the resistance of the frames 2 to changes in external pressure applied thereto. A multiplicity of frames 1 and 2 are alternately arranged at a predetermined spacing interval and connected together by a plurality of longitudinal structural members 3 located at right angles to the frames 1 and 2. A shell plate 4 is attached and secured to outer surfaces of the frames 1 and 2 and the longitudinal structural members 3 to provide a vehicle body which, although its cross-sectional shape is substantially square, has substantially the same strength with respect to external pressure applied thereto as a vehicle body of a substantially circular cross-sectional shape.

In the vehicle body construction shown in Figs. 3 and 4, the reinforcing portions A of the frames 1 and the reinforcing portions D of the frames 2 project alternately at the upper corners and the lower corners into a passenger compartment. However, as shown in Fig. 4, the upper reinforcing portions A of the frames 1 may be used for providing partition plates B at opposite ends of a baggage rack 5, and the lower reinforcing portions D of the frames 2 may be hidden under a passenger's seat 6 as indicated in a space C, for example. By this arrangement, it is possible to provide a passenger with a vacant space above his head and in the vicinity of his legs which extends over two frame spaces respectively. Thus, the space in the passager compartment can be substantially fully utilized and substantially as high riding comfort as achieved by a vehicle body of a substantially square cross-sectional shape can be achieved.

From the foregoing description, it will be appreciated that the construction of the vehicle body provided by the invention enables an increase in the resistance to external pressure and an improvement in the riding comfort of the passengers to be achieved in a limited space by reconciling the conditions provided by the substantially square cross-sectional shape and the substantially circular cross-sectional shape to each other.

While the invention has been described as being incorporated in a vehicle body used with railroad trains of high speed of the conventional form, it is to be understood that the invention is not limited to railroad car bodies in its application, and that it can have application in various other vehicles which tend to be subjected to fluctuations in external pressure applied thereto, such as magnetic or air cushion suspension type linear motor driven vehicle of superhigh speed, aircraft, submarine, etc.

## Claims

1. A vehicle body of substantially square cross-sectional shape comprising a plurality of transverse frames (1, 2); a plurality of longitidinal structural members (3) located at right angles to said frames to connect them together; and a shell plate (4) attached and secured to outer surfaces of said frames and of said longitudinal structural members characterised in that said plurality of frames (1, 2) comprises a first multiplicity of substantially square frames (1) each having reinforcing portions (A) on two upper corners thereof provided by rounding inner surfaces of the two upper corners and a second multiplicity of substantially square frames (2) having reinforcing portions (D) on two lower corners thereof provided by rounding inner surfaces of the two lower corners, respective frames of said first and second multiplicity being alternately arranged.

2. A construction of a vehicle body as claimed in claim 1, wherein said upper reinforcing portions (A) are used to provide partition plates (B) located at opposite ends of a baggage rack (5), and said lower reinforcing portions (D) are disposed in a space (C) under the seats (6).

## Patentansprüche

1. Fahrzeug-Grundkörper mit im wesentlichen quadratischem Querschnitt, umfassend eine Mehrzahl von Querspanten (1, 2); eine Mehrzahl von längsverlaufenden Bauteilen (3), die im rechten Winkel zu den Spanten angebracht sind und diese miteinander verbinden; und eine äußere Plattenverkleidung (4), die an den Außenflächen der Spanten und der längsverlaufenden Bauteile angeordnet und befestigt ist, dadurch gekennzeichnet, daß die Mehrzahl von Spanten (1, 2) eine erste Anzahl von im wesentlichen quadratischen Spanten (1) umfaßt, von denen jeder Verstärkungsabschnitte (A) an zwei seiner oberen Ecken aufweist, die dadurch entstehen, daß die Innenflächen der beiden oberen Ecken abgerundet sind, und eine zweite Anzahl von im wesentlichen quadratischen Spanten (2), die an ihren beiden unteren Ecken Verstärkungsabschnitte (D) aufweisen, die dadurch entstehen, daß die Innenflächen der beiden unteren Ecken abgerundet sind, wobei Spanten der ersten und der zweiten Anzahl jeweils abwechselnd angeodnet sind.

2. Bauweise eines Fahrzeug-Grundkörpers nach Patentanspruch 1, dadurch gekennzeichnet, daß die oberen Verstärkungsabschnitte (A) zum Vorsehen von an den entgegengesetzten Enden eines Gepäckfachs (5) befindlichen Trennwandplatten (B) benutzt werden und daß die unteren Verstärkungsabschnitte (D) in einem Raum (C) unter den Sitzen (6) angeordnet sind.

## Revendications

1. Une caisse de véhicule de section transversale de forme sensiblement carrée comportant une pluralité de cadres transversaux (1, 2); une pluralité d'éléments d'ossature longitudinaux (3) disposés à angle droit par rapport auxdits cadres opur les relier mutuellement; et une plaque de carrosserie (4) solidarisée et fixée à des surfaces extérieures desdits cadres et desdits éléments d'ossature longitudinaux, caractérisée en ce que ladite pluralité de cadres (1, 2) comprend une première multiplicité de cadres sensiblement carrés (1) ayant chacun des parties de renfort (A) sur deux coins supérieures obtenues en arrondissant les surfaces intérieures des deux coins supérieurs et une seconde multiplicité de cadres sensiblement carrés (2) ayant des parties de renfort (D) aux deux coins inférieures obtenues en arrondissant les surfaces intérieures des deux coins inférieurs, les cadres respectifs desdites première et seconde multiplicités étant disposé alterné.

2. Une configuration de caisse de véhicule comme revendiqué dans la revendication 1, dans laquelle lesdites parties de renfort supérieures (A) sont utilisées pour ménager des plaques de cloisonnement (B) disposées aux extrémités opposées d'un porte-bagages (5), et lesdites parties de renfort inférieures (D) sont disposées dans un espace (C) sous les sièges.

# FIG. I

# FIG. 2

# FIG. 3

# FIG. 4